# EUROPÄISCHE PATENTANMELDUNG

(11) **EP 2 639 573 A2**
(43) Veröffentlichungstag der Anmeldung: **18.09.2013**
(21) Anmeldenummer: 13155790.2
(22) Anmeldetag: 19.02.2013
(51) Int. Cl.: G01N 21/90

(54) **Vorrichtung zur Verwendung bei einer Inspektion eines Behälters, Inspektionssystem und Inspektionsverfahren**

(30) Priorität: 16.03.2012 DE 102012102221
(71) Anmelder: Krones AG, 93073 Neutraubling (DE)
(72) Erfinder: Gut, Thorsten, 93073 Neutraubling (DE)
(74) Vertreter: Schuhbießer, Irmgard Gertrud

(57) **Zusammenfassung**

Es sind eine Vorrichtung (10) zur Verwendung bei einer Inspektion eines Behälters (2), ein Inspektionssystem (3; 4; 5) und ein Inspektionsverfahren bereitgestellt. Die Vorrichtung (10; 50) hat eine Schutzscheibe (13; 53) zum Schützen eines ersten Raums (11; 51), der durch die Schutzscheibe (13; 53) von einem zweiten Raum (35) zur Anordnung des Behälters (2) getrennt ist, und eine vorbestimmte Markierung (14; 54), die an der Schutzscheibe (13; 53) derart angeordnet ist, dass sie an der Vorrichtung (10; 50) in einem Erfassungsbereich (22) einer Erfassungseinrichtung (20) anordenbar ist, der zur Erfassung zumindest eines Teils des Behälters (2) dient.

## Beschreibung

Die vorliegende Erfindung bezieht sich auf eine Vorrichtung zur Verwendung bei einer Inspektion eines Behälters, ein Inspektionssystem und ein Inspektionsverfahren, und insbesondere auf eine Vorrichtung, ein Inspektionssystem und ein Inspektionsverfahren, welche bei einer Behälterbehandlungsanlage zur Inspektion von in einem Strom von Behältern angeordneten Behältern Verwendung finden.

Bei der Produktion von Behältern, wie beispielsweise Glasflaschen zur Aufnahme eines Produkts, insbesondere eines Getränks, einer Reinigungsflüssigkeit usw., werden die Behälter zu deren Untersuchung auf Fehler in einer Reihe hintereinander, einem sogenannten Produktionsstrom, an einem Inspektionssystem vorbei geführt. Hierbei wird ein leerer Behälter beispielsweise von oben oder von der Seite inspiziert, bevor der Behälter gefüllt wird. Dabei ist die Vermeidung einer Verschmutzung der Behälter oberstes Gebot. Vor allem ist es zu vermeiden, dass Glasscherben in einen leeren Behälter gelangen.

Problematisch ist jedoch, dass Teile des Inspektionssystems, wie eine Erfassungseinrichtung, eine Lampe, usw., zum Schutz vor Feuchtigkeit in einem wasserdichten Gehäuse einzubauen sind. Dieses Gehäuse ist nämlich in Richtung der Behälter mit einer Glasscheibe abgedeckt. Die Glasscheibe kann bei einem Fehler im Produktionsstrom zerstört werden. Dadurch besteht die Gefahr, dass Glasscherben der Glasscheibe in die leeren Behälter gelangen. Zudem ist bei einem Bruch der Glasscheibe keine schnelle Weiterproduktion möglich, da bei einem Austausch der Glasscheibe wieder die Wasserdichtigkeit des Gehäuses sichergestellt werden muss und zudem bereits die Erfassungseinrichtung und/oder Lampe in dem Gehäuse beschädigt sein kann. Aus diesem Grund ist es denkbar, dass zwischen die Glasscheibe und den Produktionsstrom eine zusätzliche Schutzscheibe angeordnet wird, welche im Bruchfall mit einem Handgriff entfernt und durch eine neue Schutzscheibe ersetzt werden kann. In diesem Fall bleibt die Dichtigkeit des Gehäuses erhalten.

Schwierigkeiten ergeben sich jedoch, wenn eine gebrochene Schutzscheibe nicht ersetzt wird. Auch wenn die Produktion zunächst weiterlaufen kann, kann die Glasscheibe des Gehäuses brechen, in welchem die Erfassungseinrichtung und/oder die Lampe eingebaut ist/sind. Dadurch werden trotzdem deutliche Produktionsverzögerungen hervorgerufen. Zudem ist die Gefahr sehr viel höher, dass eine Glasscherbe in einen leeren Behälter gelangt.

DE 203 14 918 U1 offenbart eine Vorrichtung zur Überwachung eines Schutzglases einer Laseroptik einer Materialbearbeitungsvorrichtung auf Bruch und/oder Verschmutzung. Durch Einkopplung von elektromagnetischer Strahlung über die Stirnfläche des Schutzglases wird mit einem Fotodetektor erfasst, ob die Schutzglasscheibe gebrochen ist oder nicht.

Bei den derzeit verwendeten Inspektionssystemen in einer Behälterbehandlungsanlage ist es jedoch nicht möglich zu bestimmen, ob vor der Glasscheibe des Gehäuses eine Schutzscheibe montiert ist oder nicht. Zudem muss ein Näherungsschalter verwendet werden, um die Stellung von Einrichtungen in der Nähe der Glasscheibe zu bestimmen.

Demzufolge besteht Bedarf nach einer einfacheren und kostengünstigeren Möglichkeit, ein Schutzglas auf Vorhandensein und/oder Bruch und/oder korrekte Montage zu überwachen.

Daher ist es Aufgabe der vorliegenden Erfindung, eine Vorrichtung zur Verwendung bei einer Inspektion eines Behälters, ein Inspektionssystem und ein Inspektionsverfahren bereitzustellen, mit welchem die zuvor genannten Probleme gelöst werden können. Insbesondere soll eine Vorrichtung, ein Inspektionssystem und ein Inspektionsverfahren bereitgestellt werden, mit welchem der Nachweis erbracht werden kann, dass in der Nähe einer Glasscheibe eines Gehäuses, in welchem eine Erfassungseinrichtung und/oder eine Lampe montiert ist, alle Einrichtungen so montiert sind, dass diese Einrichtungen keinen Fehler in dem Produktionsstrom der Behälter und/oder eine Verunreinigung der Behälter verursachen.

Diese Aufgabe wird durch eine Vorrichtung zur Verwendung bei einer Inspektion eines Behälters nach Patentanspruch 1 gelöst. Die Vorrichtung hat eine Schutzscheibe zum Schützen eines ersten Raums, der durch die Schutzscheibe von einem zweiten Raum zur Anordnung des Behälters getrennt ist, und eine vorbestimmte Markierung, die an der Schutzscheibe derart angeordnet ist, dass sie an der Vorrichtung in einem Erfassungsbereich einer Erfassungseinrichtung zur Erfassung anordenbar ist, der zur Erfassung zumindest eines Teils des Behälters dient.

Bei Verwendung der Vorrichtung in einem Inspektionssystem können Schäden nachgewiesen werden, welche infolge einer fehlenden Schutzscheibe entstanden sind.

Die Anordnung und Form der vorbestimmten Markierung kann dokumentiert werden, um einen Wechsel der Schutzscheibe vor einen Serviceeinsatz einer Bedienperson feststellen zu können.

Zudem ist es möglich, Einrichtungen im Erfassungsbereich der Erfassungseinrichtung auf Vollständigkeit und/oder deren Stellung zu inspizieren. Damit kann ein Näherungsschalter zum Erfassen der Stellung dieser Einrichtungen entfallen.

Vorteilhafte weitere Ausgestaltungen der Vorrichtung sind in den abhängigen Patentansprüchen angegeben.

Es ist von Vorteil, dass die Vorrichtung zudem eine Abdeckscheibe zum flüssigkeitsdichten Abdichten der Vorrichtung aufweist.

Vorzugsweise ist die Schutzscheibe eine auswechselbare Schutzscheibe zum Schutz der Abdeckscheibe gegen Gegenstände im zweiten Raum bei einem Bruch des Behälters.

Es ist möglich, dass die Vorrichtung eine Beleuchtungsvorrichtung zur Beleuchtung eines zu inspizierenden Behälters ist, die ein Gehäuse und eine Lampe zur Abstrahlung von Licht in Richtung auf den zu inspizierenden Behälter aufweist, wobei die Abdeckscheibe das Gehäuse zum Schutz der in dem Gehäuse montierten Lampe flüssigkeitsdicht abdichtet. Alternativ kann die Vorrichtung eine Erfassungsvorrichtung zur Erfassung eines zu inspizierenden Behälters sein, die ein Gehäuse und die Erfassungseinrichtung zur Erfassung mindestens eines Teils des zu inspizierenden Behälters aufweist, wobei die Abdeckscheibe das Gehäuse zum Schutz der in dem Gehäuse montierten Erfassungseinrichtung flüssigkeitsdicht abdichtet.

Bevorzugt ist die vorbestimmte Markierung auf die Schutzscheibe aufgebracht oder die Schutzscheibe ist eine Verbundglasscheibe, zwischen deren Verbundglasscheiben die vorbestimmte Markierung angebracht ist.

Die vorbestimmte Markierung kann durch Beleuchtung mit sichtbarem Licht und/oder UV-Licht und/oder IR-Licht erfassbar sein, und/oder die vorbestimmte Markierung kann asymmetrisch sein.

Die Aufgabe wird zudem durch ein Inspektionssystem zur Inspektion eines Behälters zur Aufnahme eines Produkts nach Anspruch 7 gelöst. Das Inspektionssystem hat eine zuvor beschriebene Vorrichtung, und eine Auswerteeinrichtung zur Auswertung, ob bei der Inspektion des Behälters die vorbestimmte Markierung in dem Erfassungsbereich erfasst wurde oder nicht, wobei die Erfassungseinrichtung derart ausgestaltet und/oder angeordnet ist, dass sie einen in der Umgebung des Behälters angeordneten Bereich zur Anordnung der vorbestimmten Markierung mit erfassen kann. Hierbei ist es möglich, dass die Erfassungsvorrichtung eine Kamera ist und/oder ein Erfassungsergebnis der Erfassungsvorrichtung zusammen mit einem Zeitstempel speicherbar ist.

Die Aufgabe wird zudem durch ein Inspektionsverfahren zur Inspektion eines Behälters zur Aufnahme eines Produkts nach Patentanspruch 9 gelöst. Das Inspektionsverfahren hat die Schritte: Erfassen zumindest eines Teils eines zu inspizierenden Behälters mittels einer Erfassungseinrichtung, und Auswerten, ob bei der Inspektion des Behälters an einer Schutzscheibe eine vorbestimmte Markierung in der Umgebung des Behälters erfasst wurde oder nicht.

Vorzugsweise umfasst das Inspektionsverfahren zudem den Schritt des Speicherns eines Erfassungsergebnisses der Erfassungseinrichtung zusammen mit einem Zeitstempel, und/oder Ausgeben einer Warnung mittels einer Warneinrichtung, wenn die Erfassungseinrichtung die vorbestimmte Markierung nicht erfasst.

Das Inspektionssystem und das Inspektionsverfahren erzielen die gleichen Vorteile, wie sie zuvor in Bezug auf die Vorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand eines Ausführungsbeispiels näher beschrieben. Es zeigen:
Fig. 1 eine Behälterbehandlungsanlage mit einem Inspektionssystem gemäß einem ersten Ausführungsbeispiel;
Fig. 2 eine genauere Darstellung des Inspektionssystems mit einer Vorrichtung gemäß dem ersten Ausführungsbeispiel;
Fig. 3 eine dreidimensionale Ansicht einer Vorrichtung gemäß dem ersten Ausführungsbeispiel;
Fig. 4 eine Ansicht eines Erfassungsergebnisses mit dem Inspektionssystem gemäß dem ersten Ausführungsbeispiel;
Fig. 5 eine Ansicht eines weiteren Erfassungsergebnisses mit dem Inspektionssystem gemäß dem ersten Ausführungsbeispiel;
Fig. 6 eine vereinfachte Darstellung eines Inspektionssystems mit einer Vorrichtung gemäß einem zweiten Ausführungsbeispiel;
Fig. 7 eine vereinfachte Schnittansicht einer Schutzscheibe der Vorrichtung gemäß dem zweiten Ausführungsbeispiel;
Fig. 8 eine vereinfachte Darstellung eines Inspektionssystems mit zwei Vorrichtungen gemäß einem dritten Ausführungsbeispiel;
Fig. 9 eine Ansicht eines Erfassungsergebnisses mit dem Inspektionssystem gemäß dem dritten Ausführungsbeispiel; und
Fig. 10 eine Ansicht eines weiteren Erfassungsergebnisses mit dem Inspektionssystem gemäß dem dritten Ausführungsbeispiel.

In den Figuren sind gleiche oder funktionsgleiche Elemente, sofern nichts anderes angegeben ist, mit denselben Bezugszeichen versehen.

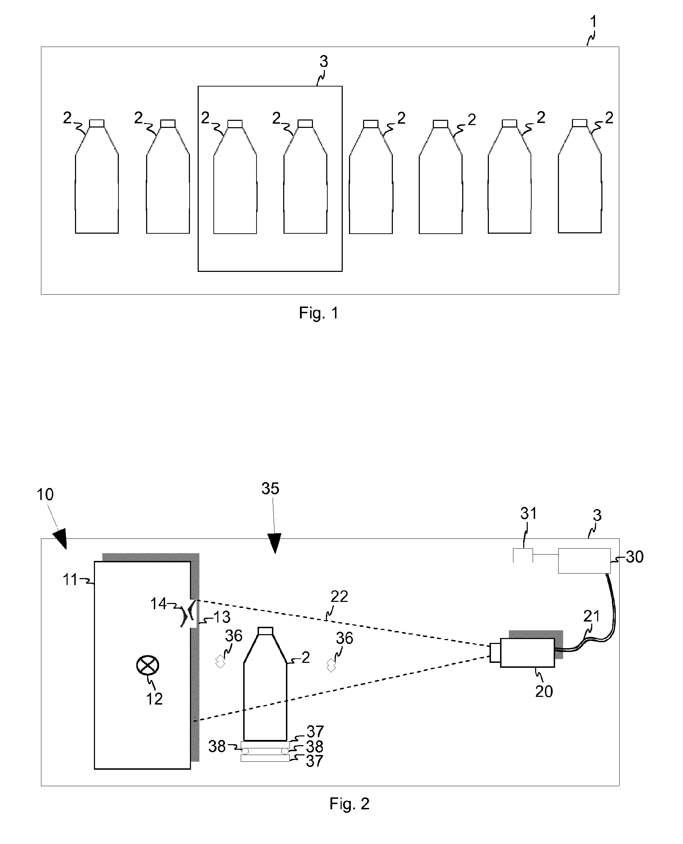

Fig. 1 zeigt sehr schematisch eine Anlage 1 zur Behandlung von Objekten 2, wie beispielsweise eine Behälterbehandlungsanlage 1 zur Behandlung von Behältern 2, usw. Nachfolgend wird die Erfindung anhand der Behälterbehandlungsanlage 1 beschrieben, auch wenn die Erfindung nicht darauf beschränkt ist.

Die Behälter 2 sind mit einem Inspektionssystem 3 gemäß diesem Ausführungsbeispiel auf korrekte Form und/oder Bruch und/oder Materialfehler usw. inspizierbar. In der Behälterbehandlungsanlage 1 werden die Behälter 2 in einer Reihe hintereinander, das heißt in einem Produktionsstrom, durch die Behälterbehandlungsanlage 1 und auch durch das Inspektionssystem 3 transportiert. Die Behälter 2 können beispielsweise fertiggestellte Behältnisse sein, wie insbesondere Kunststoff- oder Glasflaschen, Dosen usw., in die ein Produkt eingefüllt werden kann. Das Produkt kann eine Flüssigkeit, insbesondere ein Getränk, ein Reinigungsmittel usw. sein. Die Behälter 2 können jedoch auch Vorformlinge aus Kunststoff, wie Polyethylenterephthalat (PET), Polypropylen (PP) usw., sein, aus denen die Behältnisse hergestellt werden können.

Fig. 2 zeigt das Inspektionssystem 3 zur Inspektion eines Behälters 2 mit einer Vorrichtung 10 und einer Erfassungseinrichtung 20 genauer. Die Erfassungseinrichtung 20 ist über eine elektrische Leitung 21 mit einer Auswerteeinrichtung 30 verbunden, die Signale über eine Warneinrichtung 31 ausgeben kann. Die Erfassungseinrichtung 20 ist in Fig. 1 als Beispiel als Kamera dargestellt.

Die Vorrichtung 10 hat ein Gehäuse 11, eine Lampe 12 und eine Schutzscheibe 13, welche mit einer vorbestimmten Markierung 14 versehen ist. Die Lampe 12 beleuchtet den Behälter 2 derart, dass die Erfassungseinrichtung 20 in einem Erfassungsbereich 22 zumindest einen Teil des Behälters 2 erfassen kann, wie in Fig. 2 dargestellt. Die Vorrichtung 10 kann daher auch als Beleuchtungsvorrichtung 10 bezeichnet werden.

Die Schutzscheibe 13 dient zum Schützen eines ersten Raums, der durch die Vorrichtung 10, genauer ihr Gehäuse 11 gebildet wird, gegen Beschädigungen durch Gegenstände in einem zweiten Raum 35, wie beispielsweise lose Gegenstände 36. Die Gegenstände 36 sind insbesondere Glasscherben, aus dem Produktionsstrom der Behälter 2, Glasscherben der Schutzscheibe 13, Gegenstände des Transportsystems für die Behälter 2 usw. Die Schutzscheibe 13 trennt das Gehäuse 11 der Vorrichtung 10, den ersten Raum 11, also von einem zweiten Raum 35, in welchem die Behälter 2 auf einem Transportband 36 durch das Inspektionssystem 3 geführt werden. Das Transportband 36 wird in Fig. 2 als Beispiel durch Riemen 37 angetrieben.

In Fig. 2 ist auch die vorbestimmte Markierung 14 in dem Erfassungsbereich 22 der Erfassungseinrichtung 20 angeordnet und somit von der Erfassungseinrichtung 20 erfassbar. Das Erfassungsergebnis der Erfassungseinrichtung 20 wird über die elektrische Leitung 21 an die Auswerteeinrichtung 30 weitergeleitet, die eine nicht dargestellte Speichereinrichtung umfassen kann. Alternativ kann die Speichereinrichtung auch in der Erfassungseinrichtung 20 und/oder als separate Einrichtung bereitgestellt sein. Die Auswerteeinrichtung 30 kann auf der Grundlage des von der Erfassungseinrichtung 20 gelieferten Erfassungsergebnisses auswerten, anders ausgedrückt bestimmen, ob die vorbestimmte Markierung 14 in dem Erfassungsbereich 22 erfasst wurde oder nicht.

Somit kann mit Hilfe der vorbestimmten Markierung 14 der Nachweis geführt werden, ob die Schutzscheibe 13 bei der Inspektion mit der Inspektionseinrichtung 3 vorhanden war oder nicht. Ist die vorbestimmte Markierung 14 nicht vorhanden, kann die Auswerteeinrichtung 30 über die Warneinrichtung 31 eine Warnung ausgeben, so dass Bedienpersonal dazu veranlasst wird, die fehlende und/oder gebrochene und/oder falsch montierte Schutzscheibe 13 einzusetzen/auszuwechseln/richtig zu montieren.

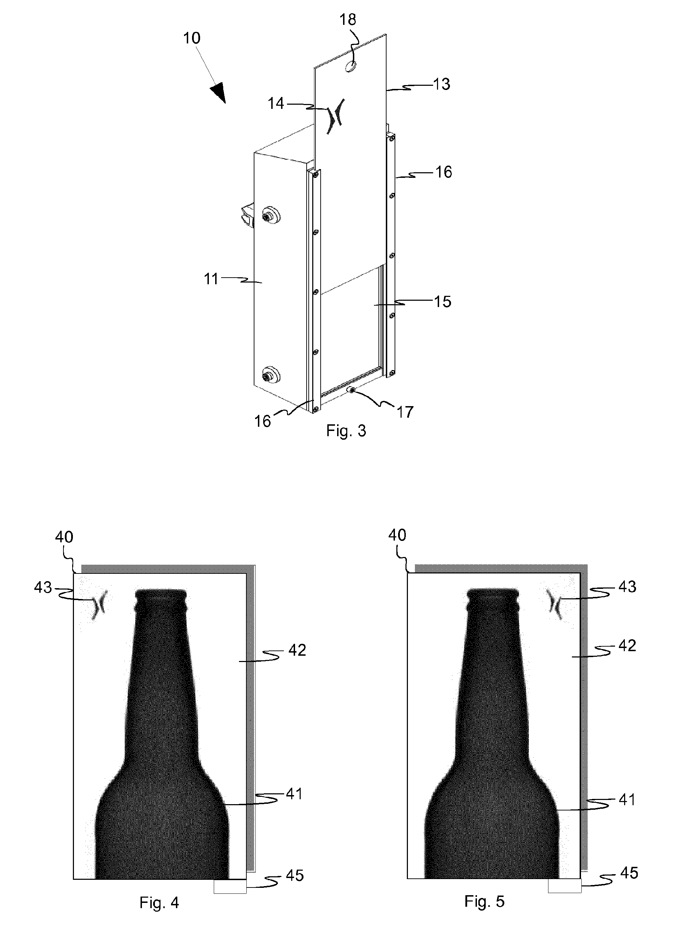

Fig. 3 zeigt die Vorrichtung 10 von Fig. 2 genauer. Die Vorrichtung 10 hat in dem dargestellten Beispiel ein quaderförmiges Gehäuse 11, dass mit einer Abdeckscheibe 15 wasserdicht abgedichtet ist. Der Begriff "wasserdicht" bedeutet hier genauer, dass in das Gehäuse 11 keine Flüssigkeit eindringen kann, so dass im Folgenden auch von flüssigkeitsdichter Abdichtung des Gehäuses 11 gesprochen ist. An dem Gehäuse 11 sind zwei Führungsschienen 16 benachbart zur Abdeckscheibe 15 derart angebracht, dass die Schutzscheibe 13 durch die Führungsschienen 16 geführt vor der Abdeckscheibe 15 an dem Gehäuse 11 angebracht werden kann. Ein Noppen 17 dient zum Begrenzen der Bewegung der Schutzscheibe 13 nach unten, wie in Fig. 3 gezeigt. Das heißt, die Schutzscheibe 13 liegt an dem Noppen 17 an, wenn sie an dem Gehäuse 11 korrekt montiert ist. Eine Öffnung 18 in der Schutzscheibe 13 erleichtert das Greifen der Schutzschreibe 13 mit der Hand einer Bedienperson, wenn die Schutzschreibe 13 montiert oder demontiert werden soll. Das heißt, die Schutzscheibe 13 ist von der Vorrichtung 10 leicht auswechselbar.

Wie aus Fig. 3 zusammen mit Fig. 2 ersichtlich, ist die vorbestimmte Markierung 14 derart an der Schutzscheibe 13 angebracht, dass sich die vorbestimmte Markierung 14 im Erfassungsbereich 22 der Erfassungseinrichtung 20 befindet, wenn die Vorrichtung 10 mit der Schutzscheibe 13 daran vor der Abdeckscheibe 15 montiert ist und am Noppen 17 anliegt.

Fig. 4 ist eine Wiedergabe des Erfassungsergebnisses der Erfassungseinrichtung 20, wenn die vorbestimmte Markierung 14 an der Vorrichtung 10 angeordnet ist, wie in Fig. 2 gezeigt. Genauer gesagt, Fig. 4 zeigt eine Erfassungsbereichsabbildung 40, in welcher eine Behältererfassungsabbildung 41 und eine Umgebungserfassungsabbildung 42 umfasst sind. Die Behältererfassungsabbildung 41 ist eine Abbildung des erfassten Teils des Behälters 2, die in Fig. 4 nur sehr vereinfacht dargestellt ist. Die Umgebungserfassungsabbildung 42 ist eine Abbildung der erfassten Umgebung des erfassten Teils des Behälters 2, die ebenfalls nur sehr vereinfacht dargestellt ist. In der Umgebungserfassungsabbildung 42 ist eine Markierungsabbildung 43 der vorbestimmten Markierung 14 enthalten. Das Bezugszeichen 45 bezeichnet einen Zeitstempel.

Die Erfassungsergebnisse der Erfassungseinrichtung 20 können in der Auswerteeinrichtung 30 zusammen mit dem Zeitstempel 45 gespeichert werden. Damit kann festgestellt werden, wann die jeweilige Schutzscheibe 13 nicht vorhanden und/oder falsch montiert und/oder gebrochen war.

Demzufolge ist die vorbestimmte Markierung 14 der Schutzscheibe 13 in dem Erfassungsbereich 22 der Erfassungseinrichtung 20 angeordnet, wenn die Schutzscheibe 13 an der Vorrichtung 10 korrekt und/oder annähernd korrekt montiert ist.

Fig. 5 zeigt eine Wiedergabe eines Erfassungsergebnisses des Behälters 2, wenn die Schutzscheibe 13 (Fig. 3) mit der vorbestimmten Markierung 14 (Fig. 3) umgedreht in die Führungsschienen 16 (Fig. 3) der Vorrichtung 10 (Fig. 3) eingesetzt ist. In diesem Fall befindet sich die vorbestimmte Markierung 14 (Fig. 3) auf der rechten Seite der Öffnung 18 (Fig. 3) der Schutzscheibe 13 (Fig. 3). Demzufolge ist in Fig. 5 auch die Markierungsabbildung 43 rechts von der Behälterabbildung 41 angeordnet. Die Markierungsabbildung 43 befindet sich jedoch weiterhin in der Umgebungserfassungsabbildung 42, wie in Fig. 5 gezeigt.

Da die in Fig. 2 bis Fig. 5 dargestellte vorbestimmte Markierung 14 asymmetrisch ist, kann mit der Auswerteeinrichtung 30 aufgrund des Erfassungsergebnisses der Erfassungseinrichtung 20 festgestellt werden, wie die Schutzscheibe 13 an der Vorrichtung 10 montiert ist. Anders ausgedrückt, durch ein asymmetrisches Symbol der vorbestimmten Markierung 14 kann die Einbaulage und/oder das Einrasten und/oder die Orientierung der Schutzscheibe 13 überwacht werden. Zudem kann festgestellt werden, ob die Vorrichtung 10 in das Inspektionssystem 3 korrekt eingeschwenkt ist, wenn die Vorrichtung 10 beispielsweise als Wandlampe montiert ist.

Bei diesem Ausführungsbeispiel wird die Schutzscheibe 13 von oben in die Vorrichtung 10 eingeschoben. Die Abdeckscheibe 15 kann jeweils bei der Herstellung der Vorrichtung 10 im Werk flüssigkeitsdicht eingesetzt werden und muss bei einem Bruch der Schutzscheibe 13 nicht ersetzt werden.

Die Auswerteeinrichtung 30 kann auch vorgeben, dass die letzten Erfassungsergebnisse, bei welchen die Schutzschreibe 13 vorhanden war, mittels eines FIFO-Speichers (First-In-First-Out-Speicher) abgelegt werden, das heißt mittels eines Speichers, bei dem diejenigen Elemente, die zuerst gespeichert wurden, auch zuerst wieder aus dem Speicher entnommen werden. Hiermit kann nachgewiesen werden, dass die Schutzscheibe 13 bei einer bestimmten Inspektion mit dem Inspektionssystem 3 montiert war oder nicht.

Die Auswerteeinrichtung 30 kann auch über Fernwartung (Teleservice) ausgelesen werden, so dass auch an einem anderen Ort als dem Aufstellungsort der Behälterbehandlungsanlage 1 bzw. des Inspektionssystems 3 festgestellt werden kann, ob die Schutzscheibe 13 montiert war oder nicht.

Zusätzlich ist ein weiteres Merkmal protokollierbar, insbesondere dass die Schutzscheibe 13 vorhanden und nicht gebrochen war.

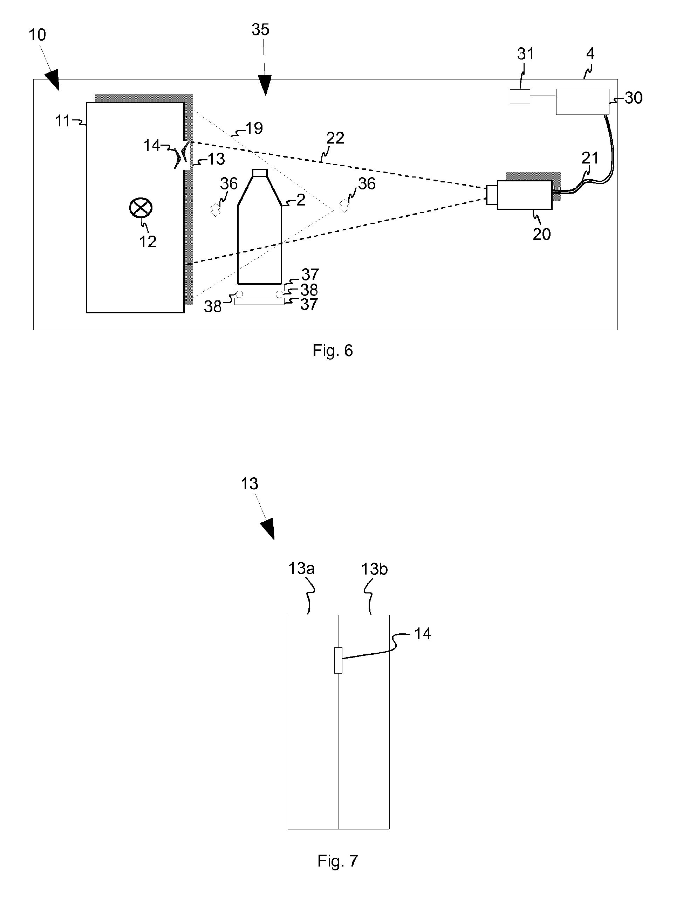

Fig. 6 zeigt ein Inspektionssystem 4 gemäß einem zweiten Ausführungsbeispiel. Das Inspektionssystem 5 gemäß diesem Ausführungsbeispiel ist in weiten Teilen gleich dem Inspektionssystem 3 des ersten Ausführungsbeispiels aufgebaut, so dass im Folgenden nur die Unterschiede zwischen dem vorangehenden und diesem Ausführungsbeispiel beschrieben sind.

Bei diesem Ausführungsbeispiel strahlt die Vorrichtung 10 Licht 19 im sichtbaren und/oder unsichtbaren Wellenlängenbereich ab. Demzufolge kann die vorbestimmte Markierung 14 im sichtbaren und/oder unsichtbaren Wellenlängenbereich liegen. Die Verwendung von unsichtbarem Licht, beispielsweise im infraroten und/oder ultravioletten Wellenlängenbereich, ist insbesondere vorteilhaft, wenn kein freier Bereich im Erfassungsbereich 22 der Erfassungseinrichtung 20 verfügbar ist. In Bezug auf den ultravioletten Wellenlängenbereich kann die vorbestimmte Markierung 14 mit ultravioletter Farbe an der Schutzscheibe 13 angebracht sein und mit ultraviolettem Licht (Auflicht) in einem Testmodus das Vorhandensein der Schutzscheibe 13 und/oder der Schutzscheibe 53 festgestellt werden. In Bezug auf den infraroten Wellenlängenbereich kann die vorbestimmte Markierung 14 mit einem oder mehreren Infrarot-Blockern an der Schutzscheibe 13 ausgeführt sein und mit Infrarot-Licht (Durchlicht) im Testmodus das Vorhandensein der Schutzscheibe 13 festgestellt werden.

Fig. 7 zeigt zudem, dass die Schutzscheibe 13 bei diesem Ausführungsbeispiel aus Verbundglasscheiben 13a, 13b, vorzugsweise Verbundschutzglasscheiben, gefertigt ist. Zwischen den Verbundglasscheiben 13a, 13b ist die vorbestimmte Markierung 14 angebracht. Das heißt, die vorbestimmte Markierung 14 ist an einer der Verbundglasscheiben 13a, 13b an der Fläche angebracht, die der jeweils anderen Verbundglasscheibe 13b, 13a zugewandt ist. Die vorbestimmte Markierung 14 kann jedoch auch an einer der Verbundglasscheiben 13a, 13b an der Fläche angebracht sein, die von der jeweils anderen Verbundglasscheibe 13b, 13a abgewandt ist.

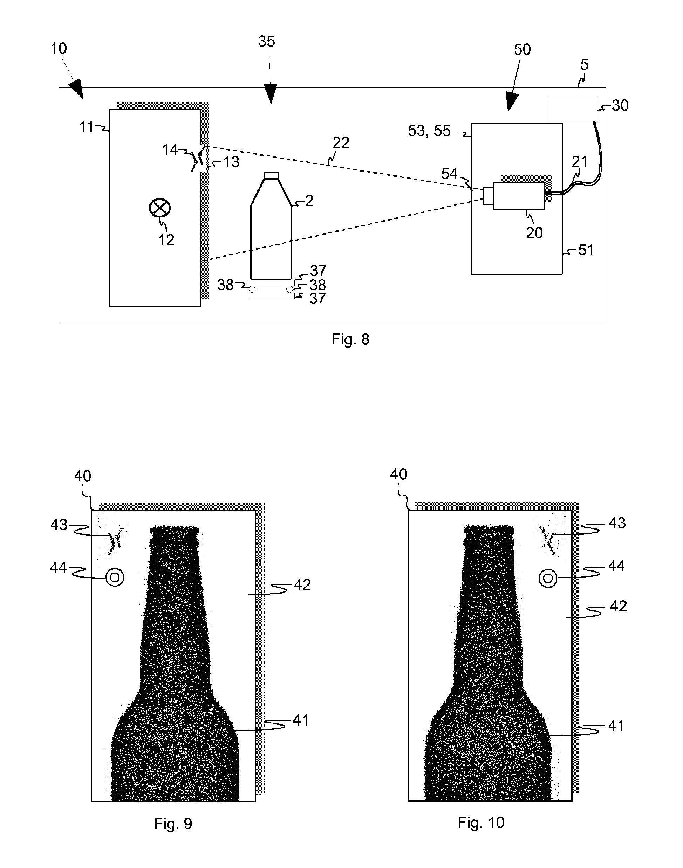

Fig. 8 zeigt ein Inspektionssystem 5 gemäß einem dritten Ausführungsbeispiel. Das Inspektionssystem 5 gemäß diesem Ausführungsbeispiel ist in weiten Teilen gleich dem Inspektionssystem 3 des ersten Ausführungsbeispiels aufgebaut, so dass im Folgenden nur die Unterschiede zwischen dem ersten und diesem Ausführungsbeispiel beschrieben sind.

Bei diesem Ausführungsbeispiel ist auch die Erfassungseinrichtung 20 in eine Vorrichtung 50 eingebaut. Die Vorrichtung 50 ist auf die gleiche Weise aufgebaut, wie die Vorrichtung 10, jedoch ist in der Vorrichtung 50 anstelle der Lampe 12 die Erfassungseinrichtung 20 eingebaut. Somit kann die Vorrichtung 50 auch als Erfassungsvorrichtung 50 bezeichnet werden.

Das heißt, die Vorrichtung 50 hat ein Gehäuse 51, eine Schutzscheibe 53, welche mit einer vorbestimmten Markierung 54 versehen ist, und eine Abdeckscheibe 55. Die Abdeckscheibe 55 ist in Fig. 8 zur Vereinfachung der Darstellung zusammen mit der Schutzscheibe 53 als ein Teil dargestellt, auch wenn es sich tatsächlich um zwei separate Teile handelt. Die Schutzscheibe 53 trennt das Gehäuse 51 der Vorrichtung 50, einen ersten Raum 51, von dem zweiten Raum 35, in welchem die Behälter 2 auf dem Transportband 36 durch das Inspektionssystem 3 geführt werden.

In Fig. 8 ist auch die vorbestimmte Markierung 54, wie die vorbestimmte Markierung 14 der Schutzscheibe 13 der Vorrichtung 10, in dem Erfassungsbereich 22 der Erfassungseinrichtung 20 angeordnet, wenn die Schutzscheibe 53 an der Vorrichtung 50 korrekt und/oder annähernd korrekt montiert ist. Demzufolge ergibt sich bei korrekter und/oder annähernd korrekter Montage ein Erfassungsergebnis, wie in Fig. 9 und Fig. 10 dargestellt.

Fig. 9 zeigt das Erfassungsergebnis der Erfassungseinrichtung 20 bei diesem Ausführungsbeispiel, wobei das Erfassungsergebnis zusätzlich eine Markierungsabbildung 44 der vorbestimmten Markierung 54 aufweist. Da die vorbestimmte Markierung 54 symmetrisch ist, wie in Fig. 6 gezeigt, kann hier nicht unbedingt eindeutig erkannt werden, ob die Schutzscheibe 53 in der richtigen Richtung eingesetzt wurde oder nicht.

Fig. 10 zeigt den Fall, bei welchem die Schutzscheibe 53 und die Schutzscheibe 13 anders herum eingesetzt wurden, als bei dem in Fig. 9 dargestellten Fall.

Demzufolge kann bei diesem Ausführungsbeispiel, ähnlich wie bei den vorangehenden Ausführungsbeispielen, der Nachweis geführt werden, dass die Schutzscheibe 13 und/oder die Schutzscheibe 53 bei der Inspektion mit der Inspektionseinrichtung 4 vorhanden war oder nicht. Zudem können die anderen Nachweise wie bei den vorangehenden Ausführungsbeispielen geführt werden. Für Genaueres sei auf die Beschreibung des ersten Ausführungsbeispiels verwiesen.

Gemäß einer Modifikation dieses Ausführungsbeispiels können sich die vorbestimmten Markierungen 14, 54 auf zwei hintereinander liegenden Scheiben eines Lampengehäuses, beispielsweise dem Gehäuse 11 der Vorrichtung 10, befinden. Hierbei kann die vorbestimmte Markierung 14 an der Schutzscheibe 13 angebracht sein, wohingegen die vorbestimmte Markierung 54 an der Gehäusescheibe 15 angebracht ist. Auch in diesem Fall ergibt sich eine Erfassungsabbildung 40 wie in Fig. 9 und Fig. 10 gezeigt. Ist auf der Erfassungsabbildung 40 die Markierungsabbildung 43 nicht vorhanden, ist es vorteilhaft mit der Warneinrichtung 31 eine Warnung auszugeben, da die Schutzscheibe 13 fehlt. Fehlt dagegen die andere Markierungsabbildung 44 in der Erfassungsabbildung 40 der Erfassungseinrichtung 20, so sind bevorzugt Maßnahmen zur Stillsetzung der Behälterbehandlungsanlage 1 zu treffen, da die wasserdichte Gehäusescheibe 15 fehlt.

Alle zuvor beschriebenen Ausgestaltungen des Inspektionssystems 3, 4, 5, der Vorrichtungen 10, 50 und des Inspektionsverfahrens gemäß dem ersten bis dritten Ausführungsbeispiel und ihrer Modifikationen können einzeln oder in allen möglichen Kombinationen Verwendung finden. Die Merkmale des ersten bis dritten Ausführungsbeispiels und ihrer Modifikationen sind beliebig miteinander kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die vorbestimmte Markierung 14 und die vorbestimmte Markierung 54 sind vorzugsweise derart angeordnet, dass sie im Erfassungsergebnis der Erfassungseinrichtung 20 nebeneinander abgebildet werden, wie in Fig. 9 und Fig. 10 gezeigt. Die vorbestimmte Markierung 14 und die vorbestimmte Markierung 54 können sich jedoch auch überlappen oder vollständig übereinander angeordnet sein. In diesem Fall ist es jedoch vorzuziehen, dass die vorbestimmte Markierung 14 und die vorbestimmte Markierung 54 klar voneinander unterscheidbar sind.

Die Schutzscheibe 13 und/oder die Schutzscheibe 53 können auch aus gehärtetem Glas gefertigt sein. Es ist auch denkbar, dass die Schutzscheibe 13 und/oder die Schutzscheibe 53 ca. 20 mm dick sind.

Es ist möglich, durch eine Fokus- und/oder Blendensteuerung und/oder eine Lichtintensitätssteuerung vor einer Produktion mit der Behälterbehandlungsanlage 1 einen Testmodus zu starten, bei welchem das Vorhandensein der Schutzscheibe 13 und/oder der Schutzscheibe 53 festgestellt wird.

Die Erfassungseinrichtung 20 kann auch den Boden eines Behälters 2 erfassen, und dabei auch den Riemen 37, der ein Zahnriemen sein kann, mitüberwachen. Damit kann eine korrekte Funktion der Riemensteuerung des Transportbands 37 erfasst werden.

Die vorbestimmte Markierung 14 und/oder die vorbestimmte Markierung 54 kann/können eine beliebige Form aufweisen. Vorzugsweise hat die vorbestimmte Markierung 14 und/oder die vorbestimmte Markierung 54 eine Größe von mindestens 5 x 5 mm. Die Form der vorbestimmten Markierung 14 und/oder der vorbestimmten Markierung 54 kann mit nutzerspezifischen Anwendungen abgestimmt sein.

Neben der durchsichtigen Schutzscheibe 13 und/oder der durchsichtigen Schutzscheibe 53 können auch Blenden oder Ähnliches kontrolliert werden, solange sie im sichtbaren und ausreichend scharf abbildenden Bereich der Erfassungseinrichtung 20 angeordnet sind.

Ist über der Lampe 12 der Vorrichtung 10 ein Steckfilter vorhanden, kann durch ausreichend große Öffnungen in den nicht verwendeten Ecken der Vorrichtung 10 eine Codierung vorhanden sein, die eine Bedienperson vor einer Fehlbedienung schützt. Eine Fehlbedienung kann beispielsweise sein, dass die Bedienperson eine falsche Blende für eine Produktionssorte von Behältern 2 verwendet.

Für die Schutzscheiben 13, 53 können grundsätzlich alle Schutzscheiben Verwendung finden, die bis zu einem gewissen Grad scharf mit der Erfassungseinrichtung 20 erfassbar sind. Ist die Erfassungseinrichtung 20 eine Kamera, so ist es vorteilhaft, dass die Schutzscheibe 13, 53 mit der Kamera scharf abbildbar ist. Ferner ist eine optische Codierung von Führungen oder Ähnlichem möglich.

Ist die Erfassungseinrichtung 20 eine Kamera, kann die Kamera telezentrische Optiken verwenden. Die Erfassungseinrichtung 20 kann eine Fotokamera und/oder eine Videokamera sein.

### Bezugszeichenliste

- 1: Anlage, Behälterbehandlungsanlage
- 2: Objekt, Behälter
- 3, 4, 5: Inspektionssystem
- 10: Vorrichtung, Beleuchtungsvorrichtung
- 11: Gehäuse, erster Raum
- 12: Lampe
- 13: Schutzscheibe
- 13a, 13b: Verbundglasscheibe
- 14: vorbestimmte Markierung
- 15: Abdeckscheibe
- 16: Führungsschiene
- 17: Noppen
- 18: Öffnung
- 19: Licht
- 20: Erfassungseinrichtung
- 21: elektrische Leitung
- 22: Erfassungsbereich
- 30: Auswerteeinrichtung
- 31: Warneinrichtung
- 35: zweiter Raum
- 36: Gegenstand
- 37: Transportband
- 38: Riemen
- 40: Erfassungsabbildung
- 41: Behältererfassungsabbildung
- 42: Umgebungserfassungsabbildung
- 43, 44: Markierungsabbildung
- 45: Zeitstempel
- 50: Vorrichtung, Erfassungsvorrichtung
- 51: Gehäuse
- 53: Schutzscheibe
- 54: vorbestimmte Markierung
- 55: Abdeckscheibe

## Patentansprüche

1. Vorrichtung (10; 50) zur Verwendung bei einer Inspektion eines Behälters (2), mit
einer Schutzscheibe (13; 53) zum Schützen eines ersten Raums (11; 51), der durch die Schutzscheibe (13; 53) von einem zweiten Raum (35) zur Anordnung des Behälters (2) getrennt ist, und
einer vorbestimmten Markierung (14; 54), die an der Schutzscheibe (13; 53) derart angeordnet ist, dass sie an der Vorrichtung (10; 50) in einem Erfassungsbereich (22) einer Erfassungseinrichtung (20) anordenbar ist, der zur Erfassung zumindest eines Teils des Behälters (2) dient.

2. Vorrichtung (10; 50) nach Anspruch 1, zudem mit einer Abdeckscheibe (15; 55) zum flüssigkeitsdichten Abdichten der Vorrichtung (10; 50).

3. Vorrichtung (10) nach Anspruch 2, wobei die Schutzscheibe (13; 53) eine auswechselbare Schutzscheibe zum Schutz der Abdeckscheibe (15; 55) gegen Gegenstände (36) im zweiten Raum (35) bei einem Bruch des Behälters (2) ist.

4. Vorrichtung (10; 50) nach Anspruch 2 oder 3,
wobei die Vorrichtung (10) eine Beleuchtungsvorrichtung zur Beleuchtung eines zu inspizierenden Behälters (2) ist, die ein Gehäuse (11) und eine Lampe (12) zur Abstrahlung von Licht (19) in Richtung auf den zu inspizierenden Behälter (2) aufweist, wobei die Abdeckscheibe (15) das Gehäuse (11) zum Schutz der in dem Gehäuse (11) montierten Lampe (12) flüssigkeitsdicht abdichtet, oder
wobei die Vorrichtung (50) eine Erfassungsvorrichtung zur Erfassung eines zu inspizierenden Behälters (2) ist, die ein Gehäuse (51) und die Erfassungseinrichtung (20) zur Erfassung mindestens eines Teils des zu inspizierenden Behälters (2) aufweist, wobei die Abdeckscheibe (55) das Gehäuse (51) zum Schutz der in dem Gehäuse (51) montierten Erfassungseinrichtung (20) flüssigkeitsdicht abdichtet.

5. Vorrichtung (10; 50) nach einem der vorangehenden Ansprüche, wobei die vorbestimmte Markierung (14; 54) auf die Schutzscheibe (13; 53) aufgebracht ist oder die Schutzscheibe (13; 53) eine Verbundglasscheibe (13a, 13b) ist, zwischen deren Verbundglasscheiben (13a, 13b) die vorbestimmte Markierung (14; 54) angebracht ist.

6. Vorrichtung (10; 50) nach einem der vorangehenden Ansprüche, wobei die vorbestimmte Markierung (14; 54) durch Beleuchtung mit sichtbarem Licht (19) und/oder UV-Licht (19) und/oder IR-Licht (19) erfassbar ist, und/oder wobei die vorbestimmte Markierung (14; 54) asymmetrisch ist.

7. Inspektionssystem (3; 4; 5) zur Inspektion eines Behälters (2) zur Aufnahme eines Produkts, mit
einer Vorrichtung (10; 50) nach einem der vorangehenden Ansprüche, und
einer Auswerteeinrichtung (30) zur Auswertung, ob bei der Inspektion des Behälters (2) die vorbestimmte Markierung (14; 54) in dem Erfassungsbereich (22) erfasst wurde oder nicht,
wobei die Erfassungseinrichtung (20) derart ausgestaltet und/oder angeordnet ist, dass sie einen in der Umgebung des Behälters (2) angeordneten Bereich zur Anordnung der vorbestimmten Markierung (14; 54) mit erfassen kann.

8. Inspektionssystem (3; 4; 5) nach Anspruch 7, wobei die Erfassungseinrichtung (20) eine Kamera ist und/oder ein Erfassungsergebnis der Erfassungseinrichtung (20) zusammen mit einem Zeitstempel (45) speicherbar ist.

9. Inspektionsverfahren zur Inspektion eines Behälters (2) zur Aufnahme eines Produkts, mit den Schritten
Erfassen zumindest eines Teils eines zu inspizierenden Behälters (2) mittels einer Erfassungseinrichtung (50), und
Auswerten, ob bei der Inspektion des Behälters (2) an einer Schutzscheibe (13; 53) die vorbestimmte Markierung (14; 54) in der Umgebung des Behälters (2) erfasst wurde oder nicht.

10. Inspektionsverfahren nach Anspruch 9, zudem mit dem Schritt
Speichern eines Erfassungsergebnisses der Erfassungseinrichtung (20) zusammen mit einem Zeitstempel (45), und/oder
Ausgeben einer Warnung mittels einer Warneinrichtung (31), wenn die Erfassungseinrichtung (20) die vorbestimmte Markierung (14; 54) nicht erfasst.
